# EUROPÄISCHE PATENTSCHRIFT

(11) **EP 2 899 075 B1**
(45) Veröffentlichungstag und Bekanntmachung des Hinweises auf die Patenterteilung: **03.01.2018**
(21) Anmeldenummer: 14192981.0
(22) Anmeldetag: 13.11.2014
(51) Int. Cl.: B60R 16/02, H01B 7/00

(54) **KRAFTFAHRZEUGBATTERIEKABEL**
VEHICLE BATTERY CABLE
CÂBLE DE BATTERIE DE VÉHICULE AUTOMOBILE

(30) Priorität: 23.01.2014 DE 102014000700
(43) Veröffentlichungstag der Anmeldung: 29.07.2015
(73) Patentinhaber: Auto-Kabel Management GmbH, 79688 Hausen i.W. (DE)
(72) Erfinder: Lorenz, Thomas, 41564 Kaarst (DE); Betscher, Simon, 41515 Grevenbroich (DE)
(74) Vertreter: Cohausz & Florack

(56) Entgegenhaltungen:
- EP-A2- 2 458 686
- WO-A1-03/091074
- CN-U- 203 093 949
- DE-A1- 3 725 459
- DE-A1- 19 742 092
- DE-A1-102009 051 487
- DE-B4-102006 062 795
- US-A- 4 325 760

## Beschreibung

Der Gegenstand betrifft ein Kraftfahrzeugbatteriekabel sowie die Verwendung eines solchen Kraftfahrzeugbatteriekabels als Batterieleitung, insbesondere B+-Leitungen, in einem Kraftfahrzeug.

Herkömmlich werden Batterieleitungen, insbesondere B+-Leitungen, mittels einer Batteriepolklemme an den Pol einer Batterie angeschlossen. Zwischen dem Pol der Batterie und einem Vorstromverteiler ist die Batterieleitung regelmäßig mit einem großen Leitungsquerschnitt gebildet. Hierbei ist es auch möglich, dass parallel zu einer Generatorleitung eine weitere Batterieleitung von einem Batteriepol zu einem Vorstromverteiler geführt wird. Ausgehend vom Vorstromverteiler wird eine erste Leitung zu einem Generator geführt. Eine zweite Leitung führt zu einem Fremdstartstützpunkt und zumindest eine dritte Leitung führt zu weiteren Verbrauchern des Bordnetzes. Eine am Batteriepol angeordnete erste Batterieleitung kann über ein Verbindungsteil mit der Generatorleitung und einer zum Vorstromverteiler führenden Leitung verbunden werden. In dem Vorstromverteiler sind wiederum zusätzliche elektrische Kontakte notwendig, um die Abgänge zum Fremdstartstützpunkt, zum Verbrauchsnetz als auch zum Generator anzuschließen. Alle diese Anschlüsse führen zu erhöhten Übergangswiderständen und somit zu elektrischen Verlusten während des Betriebs. Außerdem sind die Übergänge korrosionsgefährdet und führen zu einer erhöhten Störanfälligkeit in der Fahrzeugelektrik.

Die DE 37 25 459 A1 zeigt in einem Isoliergehäuse geführtes Kabel. In dem Isoliergehäuse sind verschiedene Kabel zusammengefasst. In einem Abgang ist ein Kabel aus dem Isoliergehäuse heraus geführt. Dies führt zu einem Übergangswiderstand an der Abzweigung. DE 197 42 092 A1 offenbart ein Kraftfahrzeugbatteriekabel gemäß dem Oberbegriff des Anspruchs 1.

Aus diesem Grunde lag dem Gegenstand die Aufgabe zu Grunde, ein Kraftfahrzeugbatteriekabel zur Verfügung zu stellen, welches gegenüber herkömmlichen Verteilsystemen einen geringeren elektrischen Widerstand hat und weniger anfällig gegenüber Störungen ist.

Diese Aufgabe wird gegenständlich durch ein Kraftfahrzeugbatteriekabel nach Anspruch 1 gelöst.

Der Erfindung liegt die Erkenntnis zu Grunde, dass von der Batterie abgehende Leitungen unterschiedliche Stromtragfähigkeiten benötigen und in unterschiedlichen Abständen von der Batterie von einem Hauptstrang abzweigen können. Batterieleitungen müssen ausgehend von einem Hauptstrang, der einen großen Leitungsquerschnitt aufweist, mehrere Leitungsstränge mit Abgängen aufweisen, die mit unterschiedlichen Querschnitten Verbraucher anschließen. Um diese Abgänge möglichst verlustfrei und störungsarm zu ermöglichen, wird vorgeschlagen, dass die mit dem Anschlussteil kontaktierte elektrische Leitung aus zumindest zwei Leitungssträngen gebildet ist. Diese Leitungsstränge werden gemeinsam in einer diese umgebenden Isolationsschicht geführt. Somit liegen die jeweiligen Leitungsstränge innerhalb der Isolationsschicht in unmittelbarem Kontakt zueinander. Somit sind sie in der Isolationsschicht auf einem gleichen elektrischen Potential. Der Strom durch die Leitung wird über alle Leitungsstränge geführt, sodass sich die Gesamtstromtragfähigkeit aus dem Gesamtquerschnitt der Leitungsstränge ergibt.

Um Verbraucher, Generatoren oder Fremdstartstützpunkte im Verlaufe des Kabels mit der Leitung kontaktieren zu können, wird vorgeschlagen, dass in Längsrichtung des Kabels, entfernt von dem Anschlussteil die Leitungsstränge an in Längsrichtung voneinander entfernt liegenden Punkten aus der Isolationsschicht heraus geführt sind. An verschiedenen Punkten innerhalb des Verlaufs des Kabels können somit jeweils einzelne Leitungsstränge aus der Isolationsschicht herausgeführt werden. Die Querschnitte der herausgeführten Leitungsstränge können angepasst an die jeweiligen Anforderungen sein. So kann beispielsweise ein mit einem Generator zu verbindender Leitungsstrang einen größeren Leitungsquerschnitt haben, als ein Leitungsstrang, der zu einem Komfortverbraucher geführt ist. Es hat sich gezeigt, dass die Störanfälligkeit durch Verwendung einer einzigen Leitung mit mehreren Leitungssträngen, die an unterschiedlichen Punkten aus der Isolationsschicht heraus geführt sind, wesentlich verringert werden kann.

Die Leitungsstränge sind zwischen dem Anschlussteil und ihrem aus der Isolationsschicht herausgeführten Ende vorzugsweise aus durchgehenden Leitern beziehungsweise Drähten oder Litzen gebildet. Zwischen dem ersten Anschlussteil und dem ersten Anschlussteil entfernt liegenden Ende eines Leitungsstrangs befindet sich keine elektrische Kontaktierung oder Übergabepunkte oder dergleichen, sodass der elektrische Widerstand eines einzelnen Leitungsstrangs minimal ist. Auch eine erhöhte Korrosionsgefahr besteht im Verlauf eines Leitungsstrangs nicht, da keine elektrischen Übergabepunkte notwendig sind.

Die Isolationsschicht ist insbesondere an den Abzweigungen von den Leitungssträngen dicht und frei von Durchtritten. Vielmehr wird die Isolationsschicht einstückig entlang der Leitungsstränge, über deren Abzweigung vom Hauptstrang hinaus, fortgeführt. Dabei ist im Bereich der Abzweigung die Isolationsschicht ununterbrochen. Der Hauptstrang und die Leitungsstränge sind mit einer einstückigen, vorzugsweise monolithischen Isolationsschicht beschichtet. Es ist keine Wicklung von Isolationsmaterial vorhanden, so dass auch keiner Überlappungsbereiche vorhanden sind, an denen Durchtritte möglich wären.

Da die jeweiligen Leitungsstränge an unterschiedliche Verbraucher oder Erzeuger angeschlossen werden und unterschiedliche Stromtragfähigkeiten aufweisen müssen, wird vorgeschlagen, dass zumindest zwei der Leitungsstränge voneinander verschiedene elektrisch wirksame Leitungsquerschnitte aufweisen. Hierdurch wird gewährleistet, dass der Leitungsquerschnitt jeweils an die Anforderungen angepasst ist. Dies führt zu einer Optimierung des Leitungsgewichtes, da der Leitungsquerschnitt nur so groß gewählt werden muss, wie dies der an den Leitungsstrang angeschlossene Verbraucher oder Erzeuger erfordert. Die Leitungsstränge mit gleichen Leitungsquerschnitten zu versehen ist ebenfalls möglich.

Insbesondere wird vorgeschlagen, dass ein erster Leitungsstrang einen Leitungsquerschnitt von mindestens 45 Quadratmillimeter hat. Ein solcher Leitungsstrang hat eine erhöhte Stromtragfähigkeit und kann beispielsweise für die Kontaktierung mit einem Generator verwendet werden. Auch die Kontaktierung mit einem Fremdstartstützpunkt ist möglich. Alle Verbraucher oder Erzeuger, die eine hohe Stromtragfähigkeit benötigen, können mit einem solchen Leitungsstrang kontaktiert werden. Zumindest ein zweiter Leitungsstrang hat einen Leitungsquerschnitt von maximal 160 Quadratmillimeter, so dass dieser Leitungsstrang für die Kontaktierung von Verbrauchern verwendet werden kann, welche geringere Stromtragfähigkeiten erfordern. Vorzugsweise ist der erste Leitungsquerschnitt zwischen 45 und 160 Quadratmillimeter und der zweite Leitungsquerschnitt zwischen 10 und 120 Quadratmillimetern.

Zur Kontaktierung der jeweiligen Leitungsstränge an den von dem ersten Anschlussteil distalen Enden können dort zweite Anschlussteile angeordnet werden. Diese können mittels Crimp-Anschlüssen, Schweißverbindungen oder Lötverbindungen an die Leitungsstränge angeschlossen werden.

Vorzugsweise ist das erste Anschlussteil eine Batteriepolklemme, zum Verbinden der Leitung bzw. der Leitungsstränge mit dem Batteriepol, insbesondere dem B+ Pol einer Kraftfahrzeugbatterie. Vorzugsweise sind alle Leitungsstränge an einen gemeinsamen ersten Anschlussteil unmittelbar angeordnet.

Die zweiten Anschlussteile sind vorzugsweise Kabelschuhe, Rohrkabelschuhe, Crimpkabelschuhe oder dergleichen.

Die Leitungsstränge, bzw. die elektrischen Drähte der Leitungsstränge sind vorzugsweise aus Kupfer oder Legierungen davon gebildet. Auch ist es möglich, dass die Leitungsstränge aus Aluminium oder Legierungen davon gebildet sind. Vorzugsweise sind alle Leitungsstränge innerhalb einer elektrischen Leitung aus einem elektrisch gleichwertigen Metall gebildet. Insbesondere sind die Leitungsstränge aus dem gleichen Material gebildet.

Da mit zunehmender Entfernung von dem ersten Anschlussteil in der Regel die Anforderung an die Stromtragfähigkeit für die Leitung bzw. die Leitungsstränge abnimmt, wird vorgeschlagen, dass auch der Leitungsquerschnitt der aus der Isolationsschicht herausgeführten Leitungsstränge mit zunehmendem Abstand von dem ersten Anschlussteil abnimmt. Auch ist es möglich, das einige oder alle Leitungsstränge mit zunehmendem Abstand von dem ersten Anschlussteil zunehmende Leitungsquerschnitte aufweisen.

Vorzugsweise ist der Leitungsquerschnitt eines ersten Leitungsstrang, der in einer ersten Entfernung von dem ersten Anschlussteil aus der Isolationsschicht herausgeführt ist, größer als der Leitungsquerschnitt eines zweiten Leitungsstrangs, der in einer zweiten Entfernung von dem ersten Anschlussteil aus der Isolationsschicht herausgeführt ist, wobei die zweite Entfernung größer ist als die erste Entfernung.

Auch ist es möglich, dass im Verlauf zwischen einem Generator und einer Batterie verschiedene Abgänge notwendig sind, der Generator jedoch der letzte elektrische Anschluss der Batterieleitung sein kann. Insbesondere wenn der Verbraucher oder Erzeuger mit den größten Anforderungen an die Stromtragfähigkeit der letzte Anschluss des Batteriekabels ist, ist es bevorzugt, wenn ein durchgehender Leitungsstrang, insbesondere der letzte Leitungsstrang der aus der Isolation herausgeführt ist, den größten Leitungsquerschnitt aller Leitungssträngen aufweist. Es wird vorgeschlagen, dass der Leitungsquerschnitt des vom ersten Anschlussteil distalen Endes des Kabels liegenden Leitungsstrangs zumindest größer ist, als ein Leitungsquerschnitt eines vor dem Ende des Kabels aus der Isolationsschicht herausgeführten Leitungsstrang. Vorzugsweise ist der Leitungsquerschnitt des am Ende aus der Isolationsschicht herausgeführten Leitungsstrangs größer als alle Leitungsquerschnitte von vor dem Ende des Kabels aus der Isolationsschicht herausgeführten Leitungssträngen.

Eine mechanische Stabilität der einzelnen Leitungsstränge kann dadurch erreicht werden, dass diese aus miteinander verseilten Einzeldrähten oder Litzen gebildet sind. Insbesondere können Litzen aus Einzeldrähten verseilt sein, die wiederum zu Leitungssträngen verseilt werden.

Um ein Herausführen aus der Leitungs besonders flexibel zu ermöglichen, wird vorgeschlagen, dass die Leitungsstränge zueinander im Wesentlichen unverseilt sind. Dies führt auch zu einer erhöhten Flexibilität der Leitung bzw. des Kabels, da die Leitungsstränge untereinander leichter verschiebbar sind.

Eine erhöhte mechanische Stabilität der Leitung bzw. des Kabels wird dann erreicht, wenn die Leitungsstränge untereinander verseilt sind.

Die Schlagrichtung der miteinander verseilten Leitungsstränge kann vorzugsweise gleichläufig zu der Schlagrichtung der Einzeldrähte oder Litzen der jeweiligen Leitungsstränge sein. In diesem Fall ist das Kabel flexibler und es kommt zu weniger Reibung zwischen den Einzeldrähten der jeweiligen Leitungsstränge. Bei einer gegenläufigen Schlagrichtung ist die mechanische Stabilität des Kabels erhöht.

Um eine gute Isolation zu gewährleisten, sind die Leitungsstränge zumindest abschnittsweise gemeinsam in der Isolationsschicht beschichtet. Das Beschichten erfolgt mittels Tauchen. Auch ist es möglich, dass zumindest in dem Bereich, in dem ein Leitungsstrang aus der Isolation herausgeführt wird, die Leitung und der Leitungsstrang mit einem Schrumpfschlauch isoliert sind. Ein Schrumpfschlauch kann insbesondere vor und hinter einem Austritt eines Leitungsstrangs aus der Leitung bzw. der Isolationsschicht vorgesehen sein. Der Schrumpfschlauch kann auf dem Leitungsstrang und die Leitung aufgeschrumpft sein, sodass der Austrittspunkt des Leitungsstrang gegenüber Längswassereintritt abgedichtet wird.

Innerhalb der Isolationsschicht sind die Leitungsstränge vorzugsweise frei von einer Isolation, sodass ein elektrischer Kontakt vorzugsweise entlang der gesamten Länge des Kabels zwischen den Isolationssträngen vorhanden ist.

Nachfolgend wird der Gegenstand anhand einer Ausführungsbeispiele zeigenden Zeichnung näher erläutert. In der Zeichnung zeigen:
- Fig. 1: den schematischen Aufbau einer herkömmlichen Leitung;
- Fig. 2: einen Querschnitt durch einen Kabel gemäß einem Ausführungsbeispiel;
- Fig. 3: eine Ansicht eines Kabels gemäß einem Ausführungsbeispiel.

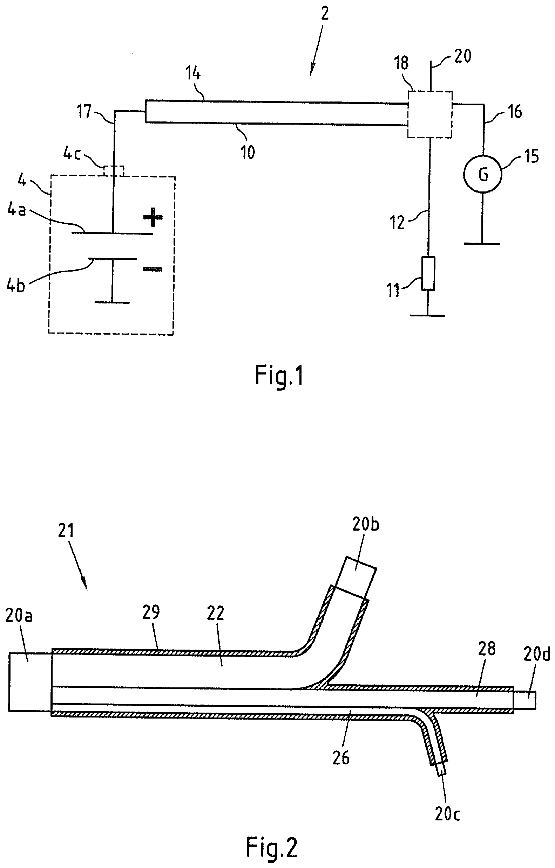

Figur 1 zeigt den schematischen Aufbau einer herkömmlichen Batterieleitung 2 samt Batterie 4. Die Batterie 4 hat einen Minuspol 4b und einen Pluspol 4a. Am Pluspol 4a ist ein Batteriepol 4c vorgesehen. An diesem Batteriepol 4c ist eine erste Batterieleitung 17 mittels einer Batteriepolklemme angeschlossen. Die erste Batterieleitung 17 ist in der Regel kürzer als 1m und führt den Batteriepluspol 4a lediglich von einer Batteriewanne weg.

Das Batteriekabel 17 kann an seinem von der Batteriepolklemme distalen Ende über ein Anschlussteil mit zwei getrennten Leitungen 10 und 14 verbunden sein. Diese Leitungen 10 und 14 verbinden die Batterie mit einem Vorstromverteiler 18. Insbesondere bei einem Fahrzeug, bei dem die Batterie 4 im Heck angeordnet ist, verlaufen die Leitungen 10 und oder 14 im Unterboden oder in der Mittelkonsole. Die Leitungen 10, 14 müssen eine große Stromtragfähigkeit aufweisen und haben deshalb vorzugsweise mehr als 40 mm² Leitungsquerschnitt, insbesondere 85 mm². Die Leitung 14 kann beispielsweise eine Generatorleitung sein und die Leitung 10 eine Verbraucherleitung. Im Vorstromverteiler 18 können die beiden Leitungen 10, 14 getrennt voneinander abgesichert werden.

Die Generatorleitung 14 wird über die weitere Generatorleitung 16 mit dem Generator 15 verbunden. Hierbei hat die Leitung 16 ebenfalls einen großen Leitungsquerschnitt, vorzugsweise 59 mm². Die Länge der Leitung 16 ist in der Regel kürzer als die der Leitungen 14 und 10.

Vom Vorstromverteiler 18 zweigt zumindest eine weitere Leitung 12 zu Verbrauchern 11 ab. Der Leitungsquerschnitt der Leitung 12 ist variabel, abhängig von der Leistung des Verbrauchers 11.

Schließlich zweigt von dem Vorstromverteiler 18 eine Leitung 20 zu einem Fremdstartstützpunkt ab.

Sowohl im Bereich der Verbindung der Leitung 17 mit den Leitungen 10 und 14, als auch im Vorstromverteiler 18 ist eine Vielzahl von elektrischen Verbindungsstellen notwendig. Diese bergen die Gefahr der Korrosion. Außerdem ist an diesen Verbindungsstellen ein erhöhter elektrischer Widerstand vorhanden, sodass der Gesamtwiderstand der Leitung erhöht ist und die Verlustleistung gegenüber durchgehenden Leitungen vergrößert ist.

Um Abhilfe zu schaffen, wird gegenständlich vorgeschlagen, eine Mehrzahl von Leitungssträngen innerhalb einer gemeinsamen Isolationsschicht zu führen und je nach Bedarf Leitungsstränge mit unterschiedlichen Leitungsquerschnitten aus der Isolationsschicht herauszuführen. Beispielhaft ist dies an einem Kabel 21 gemäß Figur 2 dargestellt. Das Kabel 21 weist eine elektrische Leitung auf, die beispielhaft aus drei Leitungssträngen 22, 26, 28 gebildet ist. Die Leitungsstränge 22, 26, 28 sind dabei vorzugsweise aus verseilten Litzen gebildet. Wie zu erkennen ist, sind die Leitungsstränge 22, 26, 28 mit unterschiedlichen Leitungsquerschnitten gebildet. Um die Leitungsstränge 22, 26, 28 herum liegt eine Isolationsschicht 29. Zu erkennen ist, dass im Bereich des Kabels 21 die Leitungsstränge 22, 26, 28 gemeinsam in der Isolationsschicht 29 geführt sind.

An einem Ende der Leitungsstränge 22, 26, 28 sind diese zusammen an einem gemeinsamen ersten Anschlussteil 20a angeschlossen. Das erste Anschlussteil 20a kann, wie gezeigt, unmittelbar an der Isolationsschicht 29 angrenzen, jedoch auch von dem Ende der Isolationsschicht 29 entfernt vorgesehen sein. Vorzugsweise ist das erste Anschlussteil 20a eine Batteriepolklemme.

Ferner ist in der Figur 2 zu erkennen, dass im Verlauf des Kabels 21 zunächst der Leitungsstrang 22 aus der Isolationsschicht 29 herausgeführt wird. Das Ende des Leitungsstrangs 22 ist mit einem zweiten Anschlussteil 20b versehen, welches beispielsweise ein Crimpkabelschuhe ist.

Ferner ist zu erkennen, dass in einem von dem ersten Anschlussteil 20a weiter entfernten Punkt der Leitungsstrang 26 aus der Isolationsschicht 29 herausgeführt ist und mit einem Anschlussteil 20c verbunden ist.

Ein vorzugsweise zentral in der Leitung verlaufender Leitungsstrang 28 erstreckt sich von dem ersten Anschlussteil 20a bis zu einem von diesen am weitesten entfernten Anschlussteil 20d. Der Leitungsstrang 28 ist vorzugsweise länger als die Leitungsstränge 26 und 22. Insbesondere kann der Leitungsstrang 28 eine Generatorleitung sein. Innerhalb der Isolationsschicht 29 verfügen die Leitungsstränge 22, 26, 28 über keine eigenständige Isolierung.

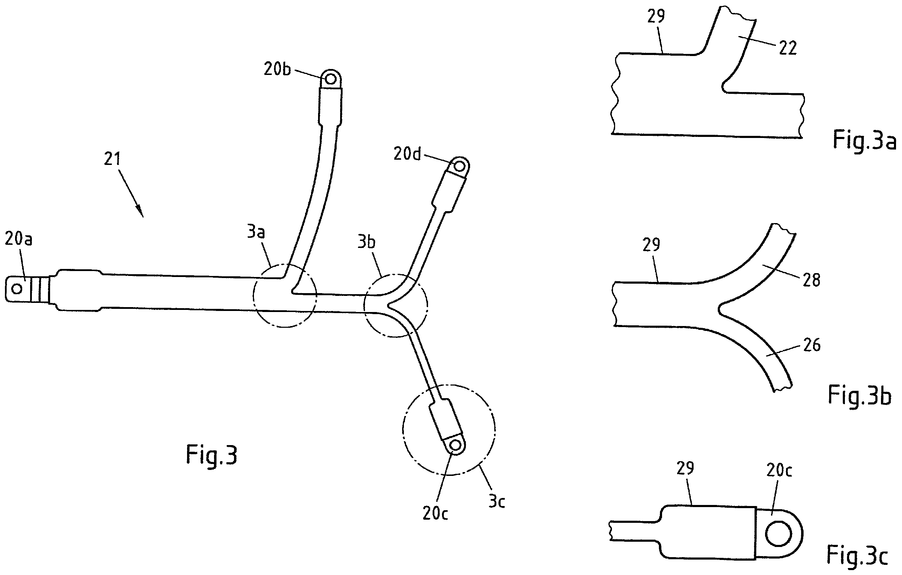

Figur 3 zeigt ein Ausführungsbeispiel, bei dem die Leitungsstränge 22, 26, 28 mit beispielsweise einer Tauchisolierung zumindest bereichsweise isoliert sind. Zu erkennen ist erneut das Kabel 21 mit den Anschlussteilen 20a, 20b, 20c und 20d. Das Detail gemäß der Figur 3a zeigt den Abgang des Leitungsstrangs 22 aus dem Bündel der Leitungsstränge 22, 26, 28. Zu erkennen ist, dass der Leitungsstrang 22 durch eine Tauchisolierung isoliert aus dem Inneren des Kabels herausgeführt ist. Die Isolationsschicht 29 umschließt den gesamten Bereich des Durchbruchs des Leitungsstrangs 22, sodass die Leitung isoliert bleibt und Wassereintritt nicht möglich ist.

Das Detail 3b in der Figur 3b zeigt einen Y-förmigen Abgang von den beiden Leitungssträngen 26, 28. Auch hier ist im Bereich der Abzweigung eine Tauchisolierung vorgesehen, sodass die Isolationsschicht 29 weitergeführt ist

Am Ende eines Leitungsstrangs kann, wie in Figur 3c dargestellt ist, ein Anschlussteil 20c, beispielsweise eine Anschlussfahne vorgesehen sein. Diese ist über eine Tauchisolierung isoliert. Der Leitungsstrang 26 ist elektrisch leitend mit dem Anschlussteil 20c verbunden, wobei hier sowohl eine stoffschlüssige Schweißverbindung, eine Lötverbindung als auch eine Crimpverbindung möglich ist.

Mit Hilfe des gegenständlichen Batteriekabels ist es möglich, Leitungswiderstände zwischen einer Batterie und Verbraucher und einem Generator zu verkleinern und somit die Verlustleistung zu reduzieren. Außerdem kann die Störanfälligkeit einer Batterieleitung verringert werden. Vorteilhaft ist auch, dass die Isolationsschicht aus einem Stück gebildet sein kann. Alle Abgänge sind somit dicht gegenüber Feuchtigkeitseintritt. Im Bereich der Abgänge ist die Isolationsschicht vorzugsweise frei von Durchtritten oder Öffnungen. Die Isolationsschicht ist erst im abisolierten Bereich eines Leitungsstrangs aufgebrochen. Die Isolationsschicht ist dabei monolithisch um die Leitungsstränge herum angeordnet und die Leitungsstränge sind nur an den Abgängen aus der sonst dichten Isolationsschicht heraus geführt. In der Isolationsschicht sind keinerlei Sollbruchstellen oder Schwächungen durch die Art die Isolation. Vielmehr sind die Leitungsstränge mit einer einheitlichen Isolationsschicht überzogen.

## Patentansprüche

1. Kraftfahrzeugbatteriekabel mit
- einem ersten Anschlussteil (20a),
- einer elektrisch mit dem Anschlussteil (20a) kontaktierten elektrischen Leitung (10), wobei die Leitung (10) aus zumindest zwei Leitungssträngen (22, 26, 28) gebildet ist, und
- einer die Leitung (10) umgebenden elektrischen Isolationsschicht (29), wobei
- die Leitungsstränge (22, 26, 28) innerhalb der elektrischen Isolationsschicht (29) durch unmittelbaren Kontakt miteinander auf einem gleichen elektrischen Potential sind, und
- in Längsrichtung des Kabels, entfernt von dem Anschlussteil die Leitungsstränge (22, 26, 28) an in Längsrichtung voneinander entfernt liegenden Punkten aus der Isolationsschicht (29) heraus geführt sind,
**dadurch gekennzeichnet,**
- **dass** die Leitungsstränge (22, 26, 28) über deren Abzweigung von der Leitung (10) hinaus mit der Isolationsschicht beschichtet sind,
- die Isolationsschicht (29) erst in einem abisolierten Bereich der Leitungsstränge (22, 26, 28) aufgebrochen ist und
- die Leitungsstränge (22, 26, 28) zumindest abschnittsweise gemeinsam mit der Isolationsschicht (29) tauchbeschichtet sind.

2. Kraftfahrzeugbatteriekabel nach Anspruch 1, **dadurch gekennzeichnet, dass** zumindest zwei der Leitungsstränge (22, 26, 28) voneinander verschiedene elektrisch wirksame Leitungsquerschnitte aufweisen.

3. Kraftfahrzeugbatteriekabel nach Anspruch 1 oder 2, **dadurch gekennzeichnet, dass** ein erster Leitungsstrang (22, 26, 28) einen Leitungsquerschnitt von minimal 45 mm², vorzugsweise zwischen 45 mm² und 160 mm² hat und dass ein zweiter Leitungsstrang (22, 26, 28) einen Leitungsquerschnitt von maximal 120 mm², vorzugsweise zwischen 10 mm² und 120 mm² hat.

4. Kraftfahrzeugbatteriekabel nach einem der vorangehenden Ansprüche, **dadurch gekennzeichnet, dass** an den Enden der aus der Isolationsschicht (2) herausgeführten Leitungsstränge (22, 26, 28) zweite Anschlussteile (20b, 20c, 20d) angeordnet sind.

5. Kraftfahrzeugbatteriekabel nach einem der vorangehenden Ansprüche, **dadurch gekennzeichnet, dass** das erste Anschlussteil (20a) eine Batteriepolklemme oder ein Kabelschuh ist.

6. Kraftfahrzeugbatteriekabel nach Anspruch 4, **dadurch gekennzeichnet, dass** die zweiten Anschlussteile (20b, 20c, 20d) Kabelschuhe sind.

7. Kraftfahrzeugbatteriekabel nach einem der vorangehenden Ansprüche, **dadurch gekennzeichnet, dass** der Leitungsquerschnitt eines ersten Leitungsstrangs(22, 26, 28), der in einer ersten Entfernung von dem ersten Anschlussteil (20a) aus der Isolationsschicht (29) heraus geführt ist, größer ist, als der Leitungsquerschnitt eines zweiten Leitungsstrangs(22, 26, 28), der in einer zweiten Entfernung von dem ersten Anschlussteil (20a) aus der Isolationsschicht (29) heraus geführt ist, wobei die zweite Entfernung größer ist als die erste Entfernung.

8. Kraftfahrzeugbatteriekabel nach einem der vorangehenden Ansprüche, **dadurch gekennzeichnet, dass** die Leitungsquerschnitte der aus der Isolationsschicht (29) herausgeführten Leitungsstränge (22, 26, 28) mit zunehmender Entfernung von dem ersten Anschlussteil (20a) kleiner werden.

9. Kraftfahrzeugbatteriekabel nach einem der Ansprüche 1 bis 6, **dadurch gekennzeichnet, dass** der Leitungsquerschnitt des am vom ersten Anschlussteil (20a) distalen Ende des Kabels liegenden Leitungsstrangs (22, 26, 28) zumindest größer ist, als ein Leitungsquerschnitt eines vor dem Ende des Kabels aus der Isolationsschicht (29) herausgeführten Leitungsstrang (22, 26, 28), vorzugsweise größer ist, als alle Leitungsquerschnitte von vor dem Ende des Kabels aus der Isolationsschicht (29) herausgeführten Leitungssträngen (22, 26, 28).

10. Kraftfahrzeugbatteriekabel nach einem der vorangehenden Ansprüche, **dadurch gekennzeichnet, dass** die jeweiligen Leitungsstränge (22, 26, 28) miteinander verseilte Einzeldrähte oder Litzen aufweisen.

11. Kraftfahrzeugbatteriekabel nach einem der vorangehenden Ansprüche, **dadurch gekennzeichnet, dass** die Leitungsstränge (22, 26, 28) zueinander im Wesentlichen unverseilt sind.

12. Kraftfahrzeugbatteriekabel nach einem der Ansprüche 1 bis 10, **dadurch gekennzeichnet, dass** die Leitungsstränge (22, 26, 28) untereinander verseilt sind.

13. Kraftfahrzeugbatteriekabel nach Anspruch 12, **dadurch gekennzeichnet, dass** die Schlaglänge der miteinander verseilten Leitungsstränge (22, 26, 28) größer ist als die Schlaglänge der Einzeldrähte oder Litzen der jeweiligen Leitungsstränge (22, 26, 28).

14. Kraftfahrzeugbatteriekabel nach einem der Ansprüche 12 oder 13, **dadurch gekennzeichnet, dass** die Schlagrichtung der miteinander verseilten Leitungsstränge (22, 26, 28) gleichläufig oder gegenläufig zu der Schlagrichtung der Einzeldrähte oder Litzen der jeweiligen Leitungsstränge (22, 26, 28).

15. Kraftfahrzeugbatteriekabel nach einem der vorangehenden Ansprüche, **dadurch gekennzeichnet, dass** zumindest im Bereich in dem ein Leitungsstrang (22, 26, 28) aus der Isolationsschicht (29) heraus geführt ist, die Leitung und der Leitungsstrang (22, 26, 28) mit der Isolierung isoliert sind.

16. Kraftfahrzeugbatteriekabel nach einem der vorangehenden Ansprüche, **dadurch gekennzeichnet, dass** die Leitungsstränge (22, 26, 28) innerhalb der Isolationsschicht frei von einer Isolation sind.

17. Kraftfahrzeugbatteriekabel nach einem der vorangehenden Ansprüche, **dadurch gekennzeichnet, dass** die Isolationsschicht (29) einstückig ist.

18. Kraftfahrzeugbatteriekabel nach einem der vorangehenden Ansprüche, **dadurch gekennzeichnet, dass** die Isolationsschicht (29) frei von Unterbrechung ist und/oder dass die Isolationsschicht (29) durchtrittsfrei ist.

## Claims

1. Motor-vehicle battery cable with
- a first connection part (20a),
- an electric line (10) which is in electrical contact with the connection part (20a), wherein the line (10) is formed by at least two line sections (22, 26, 28), and
- an electric insulating layer (29) surrounding the line (10), wherein
- the line sections (22, 26, 28) within the electric insulating layer (29) are at the same electric potential as a result of being in direct contact with one another, and
- in the longitudinal direction of the cable, at a spacing from the connection part, the line sections (22, 26, 28) lead out of the insulating layer (29) at points which are spaced from one another in the longitudinal direction,
**characterised in that**
- the line sections (22, 26, 28) are coated with the insulating layer beyond the point where they branch from the line (10),
- the insulating layer (29) is only broken away in a stripped region of the line sections (22, 26, 28) and
- the line sections (22, 26, 28) are collectively dip-coated with the insulating layer (29), at least in portions.

2. Motor-vehicle battery cable according to Claim 1, **characterised in that** at least two of the line sections (22, 26, 28) have mutually different electrically effective line cross-sections.

3. Motor-vehicle battery cable according to Claim 1 or 2, **characterised in that** a first line section (22, 26, 28) has a line cross-section of a minimum of 45 mm², preferably between 45 mm² and 160 mm², and **in that** a second line section (22, 26, 28) has a line cross-section of a maximum of 120 mm², preferably between 10 mm² and 120 mm².

4. Motor-vehicle battery cable according to any one of the preceding claims, **characterised in that** second connection parts (20b, 20c, 20d) are arranged at the ends of the line sections (22, 26, 28) leading out of the insulating layer (2) [sic].

5. Motor-vehicle battery cable according to any one of the preceding claims, **characterised in that** the first connection part (20a) is a battery terminal or a cable lug.

6. Motor-vehicle battery cable according to Claim 4, **characterised in that** the second connection parts (20b, 20c, 20d) are cable lugs.

7. Motor-vehicle battery cable according to any one of the preceding claims, **characterised in that** the line cross-section of a first line section (22, 26, 28) which leads out of the insulating layer (29) at a first spacing from the first connection part (20a) is greater than the line cross-section of a second line section (22, 26, 28) which leads out of the insulating layer (29) at a second spacing from the first connection part (20a), wherein the second spacing is greater than the first spacing.

8. Motor-vehicle battery cable according to any one of the preceding claims, **characterised in that** the line cross-sections of the line sections (22, 26, 28) leading out of the insulating layer (29) become smaller as the spacing from the first connection part (20a) increases.

9. Motor-vehicle battery cable according to one of Claims 1 to 6, **characterised in that** the line cross-section of the line section (22, 26, 28) which is located at the end of the cable which is distal from the first connection part (20a) is at least greater than a line cross-section of a line section (22, 26, 28) leading out of the insulating layer (29) before the end of the cable, is preferably greater than all line cross-sections of line sections (22, 26, 28) leading out of the insulating layer (29) before the end of the cable.

10. Motor-vehicle battery cable according to any one of the preceding claims, **characterised in that** the respective line sections (22, 26, 28) comprise litz wires or single wires which are twisted together.

11. Motor-vehicle battery cable according to any one of the preceding claims, **characterised in that** the line sections (22, 26, 28) are substantially untwisted with respect to one another.

12. Motor-vehicle battery cable according to any one of Claims 1 to 10, **characterised in that** the line sections (22, 26, 28) are twisted together.

13. Motor-vehicle battery cable according to Claim 12, **characterised in that** the length of lay of the line sections (22, 26, 28) which are twisted together is greater than the length of lay of the single wires or litz wires of the respective line sections (22, 26, 28).

14. Motor-vehicle battery cable according to any one of Claims 12 or 13, **characterised in that** the direction of lay of the line sections (22, 26, 28) which are twisted together is the same as or opposite to the direction of lay of the single wires or litz wires of the respective line sections (22, 26, 28).

15. Motor-vehicle battery cable according to any one of the preceding claims, **characterised in that,** at least in the region in which a line section (22, 26, 28) leads out of the insulating layer (29), the line and the line section (22, 26, 28) are insulated by the insulation.

16. Motor-vehicle battery cable according to any one of the preceding claims, **characterised in that** the line sections (22, 26, 28) within the insulating layer (29) are without insulation.

17. Motor-vehicle battery cable according to any one of the preceding claims, **characterised in that** the insulating layer (29) is in one piece.

18. Motor-vehicle battery cable according to any one of the preceding claims, **characterised in that** the insulating layer (29) is uninterrupted and/or in that the insulating layer (29) is free of passages.

## Revendications

1. Câble de batterie d'un véhicule automobile, ledit câble de batterie comprenant
- une première pièce de connexion (20a),
- un conducteur électrique (10) mis en contact électriquement avec la pièce de connexion (20a), où le conducteur (10) est formé par au moins deux brins de conducteur (22, 26, 28), et
- une couche d'isolation électrique (29) entourant le conducteur (10),
où les brins de conducteur (22, 26, 28) se trouvant à l'intérieur de la couche d'isolation électrique (29) sont, sous l'effet d'un contact direct les uns avec les autres, à un même potentiel électrique, et
où, à distance de la pièce de connexion, suivant la direction longitudinale du câble, les brins de conducteur (22, 26, 28) sont guidés en dehors de la couche d'isolation (29), au niveau de points se situant à distance les uns des autres suivant la direction longitudinale,
**caractérisé**
- **en ce que** les brins de conducteur (22, 26, 28), au-delà de leur ramification depuis le conducteur (10), sont revêtus de la couche d'isolation,
- **en ce que** la couche d'isolation (29) est interrompue seulement dans une zone isolée des brins de conducteur (22, 26, 28) et
- **en ce que** les brins de conducteur (22, 26, 28) sont, au moins partiellement, revêtus par immersion de façon conjointe avec la couche d'isolation (29).

2. Câble de batterie d'un véhicule automobile selon la revendication 1, **caractérisé en ce qu'**au moins deux des brins de conducteur (22, 26, 28) présentent des sections de conducteur électriquement actives, différentes l'une de l'autre.

3. Câble de batterie d'un véhicule automobile selon la revendication 1 ou 2, **caractérisé en ce qu'**un premier brin de conducteur (22, 26, 28) a une section de conducteur au minimum de 45 mm², de préférence comprise entre 45 mm² et 160 mm², et **en ce qu'**un deuxième brin de conducteur (22, 26, 28) a une section de conducteur au maximum de 120 mm², de préférence comprise entre 10 mm² et 120 mm².

4. Câble de batterie d'un véhicule automobile selon l'une quelconque des revendications précédentes, **caractérisé en ce que** des deuxièmes pièces de connexion (20b, 20c, 20d) sont disposées au niveau des extrémités des brins de conducteur (22, 26, 28) guidés en dehors de la couche d'isolation (29).

5. Câble de batterie d'un véhicule automobile selon l'une quelconque des revendications précédentes, **caractérisé en ce que** la première pièce de connexion (20a) est une borne polaire de batterie ou une cosse de câble.

6. Câble de batterie d'un véhicule automobile selon la revendication 4, **caractérisé en ce que** les deuxièmes pièces de connexion (20b, 20c, 20d) sont des cosses de câble.

7. Câble de batterie d'un véhicule automobile selon l'une quelconque des revendications précédentes, **caractérisé en ce que** la section de conducteur d'un premier brin de conducteur (22, 26, 28), qui est guidé en dehors de la couche d'isolation (29) suivant une première distance par rapport à la première pièce de connexion (20a), est plus grande que la section de conducteur d'un deuxième brin de conducteur (22, 26, 28) qui est guidé en dehors de la couche d'isolation (29) suivant une deuxième distance par rapport à la première pièce de connexion (20a), où la deuxième distance est plus grande que la première distance.

8. Câble de batterie d'un véhicule automobile selon l'une quelconque des revendications précédentes, **caractérisé en ce que** les sections de conducteur des brins de conducteur (22, 26, 28) guidés en dehors de la couche d'isolation deviennent plus petites avec une distance qui augmente par rapport à la première pièce de connexion (20a).

9. Câble de batterie d'un véhicule automobile selon l'une quelconque des revendications 1 à 6, **caractérisé en ce que** la section de conducteur du brin de conducteur (22, 26, 28) se trouvant au niveau de l'extrémité du câble, ladite extrémité étant distale de la première pièce de connexion (20a), est au moins plus grande qu'une section de conducteur d'un brin de conducteur (22, 26, 28) guidé, en amont de l'extrémité du câble, en dehors de la couche d'isolation (29), ladite section de conducteur étant de préférence plus grande que toutes les sections de conducteur de brins de conducteur (22, 26, 28) guidés, en amont de l'extrémité du câble, en dehors de la couche d'isolation (29).

10. Câble de batterie d'un véhicule automobile selon l'une quelconque des revendications précédentes, **caractérisé en ce que** les brins de conducteur respectifs (22, 26, 28) présentent des fils individuels ou cordons toronnés entre eux.

11. Câble de batterie d'un véhicule automobile selon l'une quelconque des revendications précédentes, **caractérisé en ce que** les brins de conducteur (22, 26, 28) sont essentiellement non toronnés entre eux.

12. Câble de batterie d'un véhicule automobile selon l'une quelconque des revendications 1 à 10, **caractérisé en ce que** les brins de conducteur (22, 26, 28) sont toronnés entre eux.

13. Câble de batterie d'un véhicule automobile selon la revendication 12, **caractérisé en ce que** la longueur de câblage des brins de conducteur (22, 26, 28) toronnés entre eux est plus grande que la longueur de câblage des fils individuels ou cordons des brins de conducteur respectifs (22, 26, 28).

14. Câble de batterie d'un véhicule automobile selon l'une des revendications 12 ou 13, **caractérisé en ce que** la direction de câblage des brins de conducteur (22, 26, 28) toronnés entre eux est orientée dans le même sens ou dans le sens opposé par rapport à la direction de câblage des fils individuels ou cordons des brins de conducteur respectifs (22, 26, 28).

15. Câble de batterie d'un véhicule automobile selon l'une quelconque des revendications précédentes, **caractérisé en ce qu'**au moins dans la zone dans laquelle un brin de conducteur (22, 26, 28) est guidé en dehors de la couche d'isolation (29), le conducteur et le brin de conducteur (22, 26, 28) sont isolés grâce à l'isolation.

16. Câble de batterie d'un véhicule automobile selon l'une quelconque des revendications précédentes, **caractérisé en ce que** les brins de conducteur (22, 26, 28) situés à l'intérieur de la couche d'isolation sont dépourvus d'isolation.

17. Câble de batterie d'un véhicule automobile selon l'une quelconque des revendications précédentes, **caractérisé en ce que** la couche d'isolation (29) est d'un seul tenant.

18. Câble de batterie d'un véhicule automobile selon l'une quelconque des revendications précédentes, **caractérisé en ce que** la couche d'isolation (29) ne comporte aucune interruption et/ou **en ce que** la couche d'isolation (29) ne comporte aucun passage.
